# DEMANDE DE BREVET EUROPEEN

(11) **EP 3 476 656 A1**
(43) Date de publication de la demande: **01.05.2019**
(21) Numéro de dépôt: 18195338.1
(22) Date de dépôt: 19.09.2018
(51) Int. Cl.: B60R 11/02, H04N 5/655

(54) **DISPOSITIF DE FIXATION SUR UN DOSSIER DE SIÈGE DE VÉHICULE ET SIÈGE DE VÉHICULE COMPRENANT UN TEL DOSSIER**

(30) Priorité: 27.10.2017 FR 1760149
(71) Demandeur: PSA Automobiles SA, 78300 Poissy (FR)
(72) Inventeur: VANNESTE, Pascal, 78140 Velizy Villacoublay (FR); BERTIN, Frédéric, 78340 Les Clays sous Bois (FR); PINTO TEIXEIRA, Frédéric, 91160 Ballainvilliers (FR); HAYAT, David, 78770 Auteuil (FR); PEYLABOUD, Patrick, 78610 Le Perray en Yvelines (FR)

(57) **Abrégé**

L'invention concerne un dispositif de fixation (1) solidarisé sur l'armature d'un dossier (4) de siège (2) de véhicule destiné à maintenir de façon amovible un équipement apte à supporter une diversité d'appareils ou d'objets, caractérisé en ce que le dispositif de fixation (1) est engagé sur un côté latéral de l'armature (11) du siège (2,12) .

L'invention concerne également un siège (2,12) de véhicule automobile comprenant un dossier (4) comprenant un dispositif de fixation (1) .

## Description

La présente invention concerne un dispositif de fixation solidaire d'un dossier de siège de véhicule. Ce dispositif permet la pose de supports diversifiés aptes à accueillir une diversité d'appareils multimédia, mobiles ou d'objets adaptés à cet usage.

Dans l'état de la technique, nous connaissons le document FR2855472 qui décrit un dossier de siège comprenant un écran d'affichage pivotant autour d'un axe horizontal, en position d'utilisation l'écran d'affichage est déployé par une rotation de 180 degrés autour de l'axe horizontal afin d'être visible par le passager, dans cette position de service, l'écran d'affichage est placé sensiblement au niveau de l'appui tête du siège avant. En position de rangement, l'écran d'affichage vient se loger dans un renfoncement du dossier, et l'écran d'affichage a sa face d'affichage en regard de la surface du renfoncement. Dans cette position, l'écran n'est donc pas visible par le passager. De plus, en position de rangement une tablette vient recouvrir l'écran de visualisation qui devient invisible derrière la tablette rangée. En outre, lorsque l'écran d'affichage est en position d'utilisation, l'écran est placé en particulier à une hauteur inconfortable pour la lecture de l'écran de visualisation. De plus, dans cette configuration l'écran de visualisation est fixé à demeure. Un autre document FR3023229 concerne un agencement d'un dossier de siège de véhicule équipé d'une tablette sur laquelle est installé un appareil multimédia orientable dans le champ du regard de l'utilisateur, la tablette étant mobile, selon un secteur angulaire entre une position où elle est en appui contre le dossier du siège à une position adéquate d'appui sur un écran tactile et de lecture d'un appareil multimédia par un utilisateur.

Le but de l'invention est donc de proposer un dispositif de fixation 1 solidaire d'un dossier de siège de véhicule destiné à être équipé de façon amovible d'un support polyvalent apte à accueillir un appareil multimédia nomade. Le dispositif de support pouvant accueillir d'autres types d'éléments présentant des fonctionnalités avantageuse et/ou attrayantes pour l'utilisateur.

A cet effet, la présente invention a pour objet un dispositif de fixation solidarisé sur l'armature d'un dossier de siège de véhicule destiné à maintenir de façon amovible un équipement apte à supporter une diversité d'appareils ou d'objets, le dispositif de fixation étant engagé sur un côté latéral de l'armature du siège.

Avantageusement, le dispositif est constitué d'un corps en U comprenant deux branches parallèles et d'un moyen de fixation.

Suivant une autre caractéristique avantageuse, une première branche comporte sur sa face externe un embout cylindrique en saillie, et dans le prolongement de la branche une empreinte de forme carrée destinée à recevoir le moyen de fixation.

Suivant une autre caractéristique, le bord inférieur de la branche se prolonge par une paroi de forme trapézoïdale comportant sur sa face interne un crochet muni de clip.

Avantageusement, le moyen de fixation est constitué d'une collerette de forme carrée prolongée par un élément tubulaire muni à son extrémité d'un taraudage.

Selon une variante, la seconde branche est de forme triangulaire à l'extrémité arrondie.

Selon une autre variante, la seconde branche comporte à son extrémité un lamage comprenant un passage pour une vis.

Selon une autre variante, l'embout cylindrique comporte à son extrémité une première section taraudée se poursuivant par une calotte sphérique concave et par une seconde section cylindrique taraudée.

Avantageusement, la calotte sphérique comporte des empreintes semi sphériques disposées suivant l'axe de la branche.

Par ailleurs, l'invention a également pour objet un siège de véhicule automobile comprenant un dossier comprenant un dispositif de fixation, ayant les caractéristiques susmentionnées.

D'autres caractéristiques et avantages de l'invention apparaîtront clairement à la lecture de la description ci-après, donnée à titre indicatif en référence aux dessins annexés dans lesquels:
- La figure 1 est une vue en perspective d'une disposition de sièges fixés sur le plancher d'un véhicule, certains de ces sièges comprenant des dispositifs de fixation 1 suivant l'invention ;
- La figure 2 est une vue en perspective d'un dispositif de fixation implanté suivant l'invention sur un dossier de siège représenté en partie, l'attache comportant un enjoliveur de style ;
- La figure 3 est une vue en perspective d'un dispositif de fixation suivant l'invention ;
- Les figures 4a-4B sont des vues en perspectives montrant l'assemblage du dispositif de fixation sur l'arrière de l'armature représentée en partie du dossier du siège, selon l'invention ;
- La figure 5 est une vue en perspective montrant l'assemblage du dispositif de fixation sur l'avant de l'armature représentée en partie, du dossier du siège, selon l'invention ;
- La figure 6 est une vue en perspective montrant l'assemblage du dispositif de fixation sur le dessus de l'armature représentée en partie, du dossier du siège, selon l'invention ;
- La figure 7 est une vue en perspective montrant le dispositif de fixation sur l'arrière de l'armature représentée en partie, du dossier du siège, l'attache étant démunie de son enjoliveur de style selon l'invention.

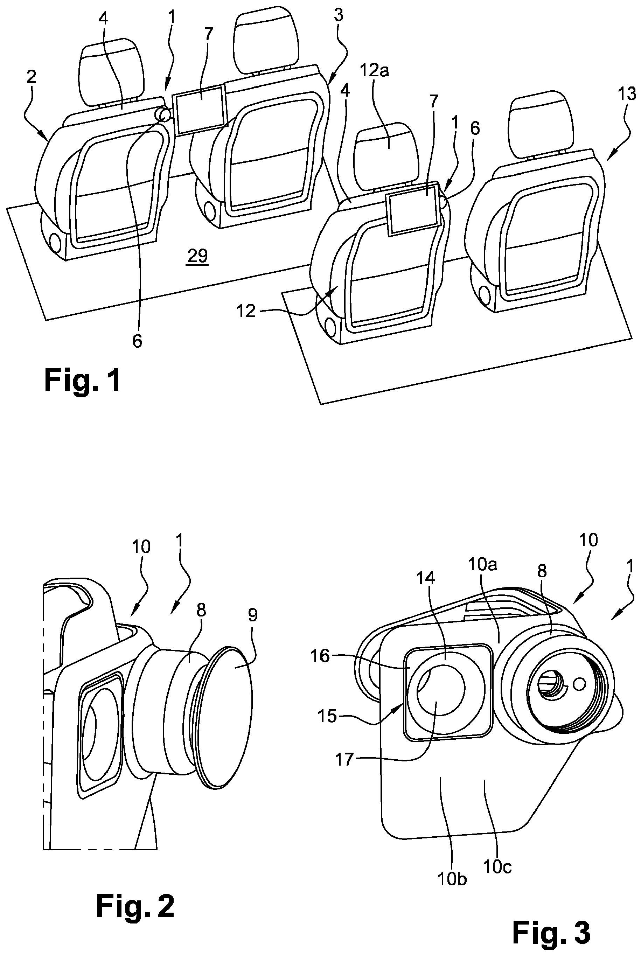

La figure 1 est une vue en perspective d'une disposition de sièges 2,3,12,13 fixés sur le plancher d'un véhicule, certains de ces sièges 2,12 comprenant des dispositifs de fixation 1 suivant l'invention. Deux couples de sièges 2,3,12,13 équipés d'appui-têtes disposés sur le plancher 29 du véhicule par exemple à l'avant comprennent des configurations différentes. Dans la première configuration, on voit qu'un dispositif de fixation 1 est solidaire en haut du dossier 4 et en rive de sa bordure latérale placé entre les deux sièges 2,3. Le dispositif de fixation 1 est équipé d'un support 6 accueillant une tablette 7 placée entre les deux sièges 2,3. Ainsi, la tablette 7 peut être visionnée par les occupants des deux sièges placés à l'arrière. Dans la seconde configuration, le support 6 placé sur le dispositif de fixation 1 est orienté derrière le siège 12 sous l'appui tête 12a. Dans ce cas la tablette 7 peut être visionnée ou utilisée par l'occupant du siège placé à l'arrière.

La figure 2 est une vue en perspective d'un dispositif de fixation 1 implanté suivant l'invention sur un dossier de siège représenté en partie, l'embout 8 comportant un bouchon 9 sous forme d'un enjoliveur de style. Cette vue montre que le dispositif de fixation 1 comporte un embout 8 cylindrique en saillie venu de matière avec le corps 10 du dispositif de fixation 1. L'embout 8 cylindrique constitue un moyen de préhension permettant de fixer différents types d'éléments comme par exemple un support de tablette 7 tel que cela est illustré sur la figure 1. Lorsque, le dispositif de fixation 1 n'est pas utilisé, l'enjoliveur de style 9 est monté sur le moyen de préhension pour fournir une bonne qualité perçue.

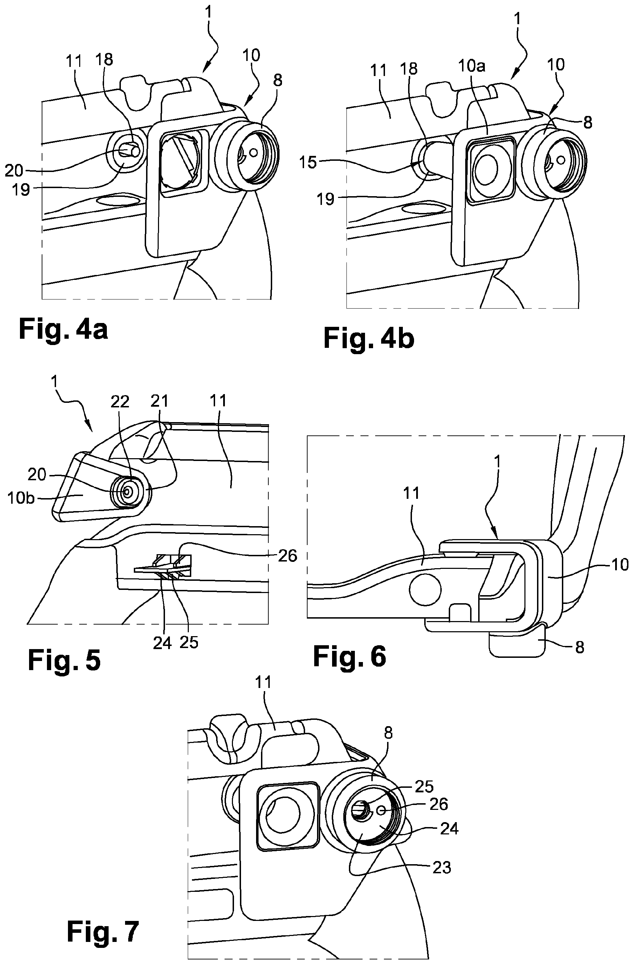

La figure 3 est une vue en perspective d'un dispositif de fixation 1 suivant l'invention. Le dispositif de fixation 1 possède un corps 10 avec une forme générale en U, de manière à venir coiffer l'armature 11 (visible figure 4A-4B) du dossier 4 du siège 2,12 (visible figure 1). La face visible du U comporte sur une paroi de la branche 10a du corps 10 l'embout 8 cylindrique en saillie radiale, à proximité de celui-ci une ouverture traversante 14 permet d'introduire un moyen de fixation 15. Ce moyen de fixation 15 est constitué par une collerette 16 de section carrée, prolongée par un élément tubulaire 17, cette élément tubulaire 17 comporte un taraudage a son extrémité libre. L'élément tubulaire 17 est engagé dans l'ouverture 14 tandis que la collerette 16 vient coopérer en appui sur des parois de l'ouverture 14. La branche 10a du U est prolongée de son bord inférieure par une paroi 10c de forme trapézoïdale. Cette paroi 10c comporte sur sa face interne un crochet (non visible sur la figure) permettant la mise en position préalable du dispositif de fixation 1.

Les figures 4a-4B sont des vues complémentaires en perspectives montrant le principe d'assemblage du dispositif de fixation 1 sur l'arrière de l'armature 11 du dossier 4 (figure1) du siège, selon l'invention. La figure 4a montre le dispositif de fixation 1 prépositionné démuni de son moyen de fixation 15. L'armature 11 comporte une ouverture 18 ménagée dans un bossage 19 en saillie. Cette ouverture 18 permet le passage d'une vis 20 destinée à venir en prise dans le moyen de fixation 15 comme cela est montré sur la figure 4b. Le dispositif de fixation 1 coiffe l'armature 11 sur sa face avant et sa face arrière. L'assemblage du moyen de fixation 15 dans la branche 10a plaquée sur la face arrière de l'armature 11 vient solidariser le dispositif de fixation 1 fermement sur l'armature 11. Comme montré sur la figure 5, la branche 10b du U, plaquée sur la face avant de l'armature 11 est de forme sensiblement triangulaire à l'extrémité arrondie. Cette branche 10b possède un lamage 21 et un passage 22 pour la vis 20 venant en prise dans le moyen de fixation 15. On comprend que les passages de l'armature 11 et de la branche 10b sont en correspondance. La tête de la vis 20 vient en appui dans le lamage 21, lorsque le filetage de la vis 20 est en prise dans le moyen de fixation 15, il bloque fermement le dispositif de fixation 1 sur l'armature 11 du siège 2,12(visible figure 1).

La figure 5 montre l'assemblage du dispositif de fixation 1 sur la face avant de l'armature 11 représentée en partie, du dossier 4 du siège 2, 12 (visible figure 1). Le crochet 24 de maintien de forme rectangulaire vient s'introduire et s'ajuster dans une ouverture 26 de forme correspondante. Des clips élastiques 25 associés au crochet 24 permettent de bloquer le dispositif de fixation 1 contre la paroi de l'armature 11.

La figure 6 est une vue en perspective montrant l'assemblage du dispositif de fixation 1 sur le dessus de l'armature 11 représentée en partie, du dossier du siège, selon l'invention. La vue montre que les parois des branches du dispositif de fixation 1 en forme de U coiffent et sont plaquées sur l'armature 11. En particulier, on voit l'embout 8 cylindrique en saillie venu de matière avec le corps 10 du dispositif de fixation 1 qui permet la fixation d'accessoires diversifiés.

La figure 7 est une vue en perspective montrant le dispositif de fixation 1 sur l'arrière de l'armature 11 représenté en partie, du dossier 4 du siège 2, 12 (visible figure 1) l'embout 8 étant démunie de son enjoliveur de style selon l'invention. La vue de l'embout 8 cylindrique montre ses moyens de connexion, en particulier il comporte une ouverture 23 cylindrique dans laquelle est ménagé un premier taraudage se prolongeant par une calotte sphérique concave 24 et une seconde section 25 taraudée est réalisé. Ce taraudage 25 a un diamètre réduit par rapport à celui de l'entrée de l'embout 8. En outre, deux empreintes semi sphérique 26 sont réalisées dans la calotte sphérique suivant l'axe de la branche. Ces empreintes 26 ont pour but d'orienter et bloquer un accessoire tel que par exemple un bras de support dans une position déterminée. On comprend que les supports diversifiés destinés à se fixer sur le dispositif de fixation 1, possèdent des moyens de connexions complémentaires adaptés pour coopérer avec le moyen connexion de l'embout 8.

## Revendications

1. Dispositif de fixation (1) solidarisé sur l'armature d'un dossier (4) de siège (2) de véhicule destiné à maintenir de façon amovible un équipement apte à supporter une diversité d'appareils ou d'objets, **caractérisé en ce que** le dispositif de fixation (1) est engagé sur un côté latéral de l'armature (11) du siège (2,12).

2. Dispositif (1) selon la revendication 1, **caractérisé en ce qu'**il est constitué d'un corps (10) en U comprenant deux branches (10a, 10b) parallèles et un moyen de fixation (15).

3. Dispositif (1) selon la revendication 1, **caractérisé en ce qu'**une première branche (10a) comporte sur sa face externe un embout cylindrique (8) en saillie, et dans le prolongement de la branche (10a) une empreinte (14) de forme carrée destiné à recevoir le moyen de fixation (15).

4. Dispositif (1) selon l'une quelconque des revendications 2 ou 3, **caractérisé en ce que** le bord inférieur de la branche (10a) se prolonge par une paroi de forme trapézoïdale (10c) comportant sur sa face interne un crochet (24) muni de clip (25) .

5. Dispositif (1) selon l'une quelconque des revendications 2 ou 3, **caractérisée en ce que** le moyen de fixation (15) est constitué d'une collerette (16) de forme carré prolongée par un élément tubulaire (17) muni à son extrémité d'un taraudage.

6. Dispositif (1) selon l'une quelconque des revendications 4 ou 5, **caractérisé en ce que** la seconde branche (10b) est de forme triangulaire à l'extrémité arrondie.

7. Dispositif (1) la revendication 6, **caractérisé en ce que** la seconde branche (10b) comporte à son extrémité un lamage (21) comprenant un passage (22) pour une vis (20).

8. Dispositif (1) selon la revendication 3, **caractérisé en ce que** l'embout cylindrique (8) comporte à son extrémité une première section (23) taraudée se poursuivant par une calotte sphérique (24) concave et par une seconde section (25) cylindrique taraudée.

9. Dispositif (1) selon la revendication 8, **caractérisé en ce que** la calotte sphérique (24) comporte des empreintes (26) semi sphériques disposées suivant l'axe (27) de la branche (10a).

10. Siège (2,12) de véhicule automobile comprenant un dossier (4) comprenant un dispositif de fixation (1), selon l'une quelconque des revendications 1 à 9.

## Revendications modifiées

### Revendications modifiées conformément à la règle 137(2) CBE.

1. Dispositif de fixation (1) solidarisé sur l'armature d'un dossier (4) de siège (2) de véhicule destiné à maintenir de façon amovible un équipement apte à supporter une diversité d'appareils ou d'objets, le dispositif de fixation (1) étant engagé sur un côté latéral de l'armature (11) du siège (2, 12), qu'il est constitué d'un corps (10) en U comprenant deux branches (10a, 10b) parallèles et un moyen de fixation (15), **caractérisé en ce qu'**une première branche (10a) comporte sur sa face externe un embout cylindrique (8) en saillie, et dans le prolongement de la branche (10a) une empreinte (14) de forme carrée destiné à recevoir le moyen de fixation (15).

2. Dispositif (1) selon la revendication 1, **caractérisé en ce que** le bord inférieur de la branche (10a) se prolonge par une paroi de forme trapézoïdale (10c) comportant sur sa face interne un crochet (24) muni de clip (25) .

3. Dispositif (1) selon l'une quelconque des revendications 1 ou 2, **caractérisée en ce que** le moyen de fixation (15) est constitué d'une collerette (16) de forme carré prolongée par un élément tubulaire (17) muni à son extrémité d'un taraudage.

4. Dispositif (1) selon l'une quelconque des revendications 2 ou 3, **caractérisé en ce que** la seconde branche (10b) est de forme triangulaire à l'extrémité arrondie.

5. Dispositif (1) la revendication 4, **caractérisé en ce que** la seconde branche (10b) comporte à son extrémité un lamage (21) comprenant un passage (22) pour une vis (20) .

6. Dispositif (1) selon la revendication 1, **caractérisé en ce que** l'embout cylindrique (8) comporte à son extrémité une première section (23) taraudée se poursuivant par une calotte sphérique (24) concave et par une seconde section (25) cylindrique taraudée.

7. Dispositif (1) selon la revendication 6, **caractérisé en ce que** la calotte sphérique (24) comporte des empreintes (26) semi sphériques disposées suivant l'axe (27) de la branche (10a).

8. Siège (2,12) de véhicule automobile comprenant un dossier (4) comprenant un dispositif de fixation (1), selon l'une quelconque des revendications 1 à 7.
